# EUROPEAN PATENT SPECIFICATION

(11) **EP 0 617 885 B1**
(45) Date of publication and mention of the grant of the patent: **27.08.1997**
(21) Application number: 94200856.6
(22) Date of filing: 29.03.1994
(51) Int. Cl.: A01J 7/00

(54) **A construction for automatically milking animals**
Konstruktion zum automatischen Melken von Tieren
Dispositif de traite automatique d'animaux

(30) Priority: 01.04.1993 NL 9300577
(43) Date of publication of application: 05.10.1994
(73) Proprietor: Texas Industries Inc., Willemstad, Curaçao (AN)
(72) Inventor: van der Lely, Cornelis, CH-6300 Zug (CH)
(74) Representative: Mulder, Herman

(56) References cited:
- EP-A- 0 360 354
- EP-A- 0 448 132
- EP-A- 0 532 066

## Description

The present invention relates to a construction for automatically milking animals, such as cows, comprising a milking box and a milking robot with teat cups. The teat cups can be connected to the teats of an animal. Such a construction is known from EP-A-0 448 132. Therein a robotarm construction is described with two teat cups which are individually connected to the teats one after another, while the remaining teat cups are applied from a different direction. In order to improve the efficiency as much as possible, the connection of the teat cups to the teats must be effected without delay. According to the invention, the construction, of the type as described in the preamble, is therefore characterized in that out of a set of four teat cups a simultaneous coupling of either two or four teat cups with the corresponding either two or four teats of an animal to be milked is obtainable by means of a plurality of carriers, with each carrier being suitable for carrying at least one of said teat cups. Thus, the period of time required for connecting the teat cups to the teats can be significantly reduced.

In accordance with another embodiment, a carrier can be pivotal about a mainly horizontal shaft which extends in the lengthwise direction of the milking box. The carrier may be accommodated on a supporting element which is movable in two different directions and is pivotal about this shaft, which extends approximately horizontally in the lengthwise direction of the milking box. In accordance with a further embodiment, the construction, of the type as described in the opening paragraph, is provided with a spring at or near that end of carrier that is remote from the teat cup or teat cups a which compensates for the weight of the teat cup or teat cups. This construction is more in particular advantageous when it is used with the above said carrier which is pivotal about a mainly horizontal shaft extending in the lengthwise direction of the milking box.

In accordance with yet a further embodiment, the construction, of the type as described in the opening paragraph, has a detection device, such as a laser, which is connected to one of the carriers, with the aid of which detection device the position of the teats of an animal can be determined. When the carrier to which this detection device is attached has been moved in such a manner that the teat cup or teat cups carried thereby are located under the udder of the animal, then the detection device is approximately halfway under the animal at the leading side of the udder. Since the detection device is attached to only one carrier, and the position of the teats with respect to this single carrier is determined with the aid of the detection device, it is of advantage if the control of the remaining carriers will be attuned to the position of the carrier to which the detection device is connected.

In addition, during the milking operation, a teat cup being connected to a teat is capable of free motion to a relevant carrier with the aid of a flexible connecting element and, after milking, can be pulled up against the end of this carrier. When the teat cups are connected to the carriers in such a manner that they can move freely, then no lateral or other forces are exerted on the teats and the animal is in a comfortable position for being milked by the milking robot. Such a construction requires special measures as regards the positions of the milk and/or pulsation tubes leading to the teat cups. In accordance with yet another embodiment, the construction is therefore characterized in that at least a portion of the milk and/or pulsation tube of a teat cup extends in the shape of a loop. More specifically when use is made of a tubular carrier, which is provided with a through-connection element for the milk and/or pulsation tubes, a portion of the milk and/or pulsation tube between a teat cup and said through-connection element may extend in the shape of a loop. The tubes may be looped in such a manner that one or more of these tubes extend partly at the upper side of the tubular carrier to over the tubular carrier in the shape of an arc. More in particular, that portion of the milk and/or pulsation tube that extends between a teat cup and the through-connection element is connected from the teat cup to the through-connection element via a slotted aperture in the bottom side of the tubular portion of the carrier by passing it through this tubular portion of the carrier and through a slotted aperture in the upper side of the tubular portion of the carrier.

For a better understanding of the invention and to show how the same may be carried into effect, reference will now be made, by way of example, to the accompanying drawings, in which:
Figure 1 is a plan view of a milking box, the milking robot comprising two carriers for two teat cups each;
Figure 2 is a side view of the milking box shown in Figure 1;
Figures 3 - 7 show the consecutive positions occupied by the carriers for coupling of the teat cups;
Figure 8 is a plan view of the end section of a carrier for two teat cups;
Figure 9 is a side view of the carrier end section shown in Figure 8;
Figure 10 is a plan view of a second embodiment of a milking box, in which use is made of four carriers for carrying one teat cup each, whilst from both sides one teat cup can be moved to under the animal passing between a front leg and a hind leg and two teat cups can be brought in position by passing them between the two hind legs;
Figure 11 is a plan view of a third embodiment of a milking box, in which use is made of four carriers for carrying one teat cup each, whilst from both sides two teat cups can be moved to under the animal between a front leg and a hind leg;
Figure 12 is a rear view of the milking box shown in Figure 11;
Figure 13 is a plan view of the end section of a carrier for one teat cup, and
Figure 14 is a side view of the carrier end section as shown in Figure 13.

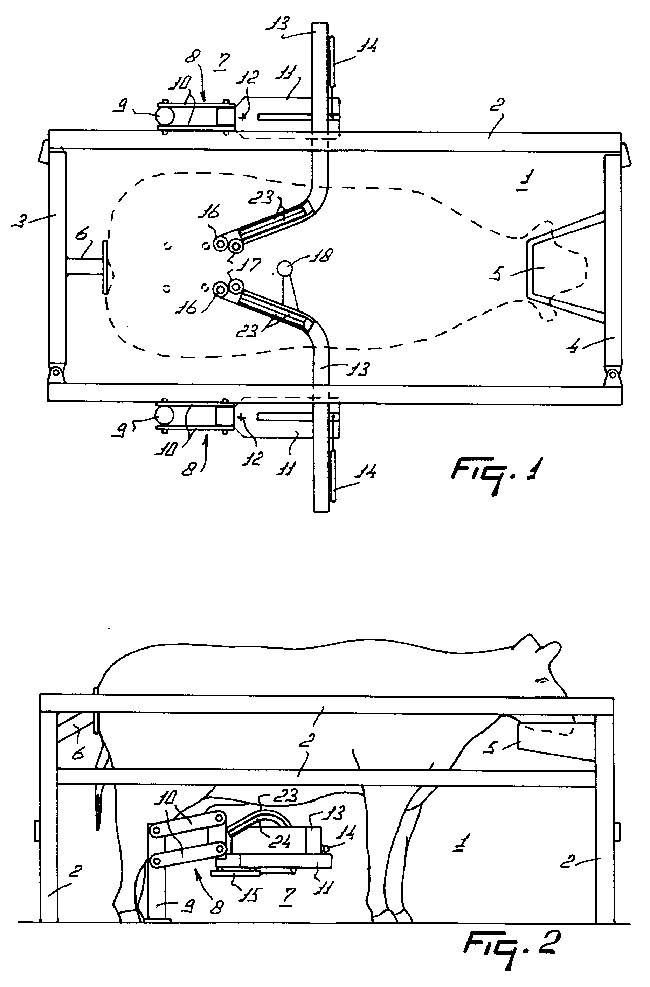

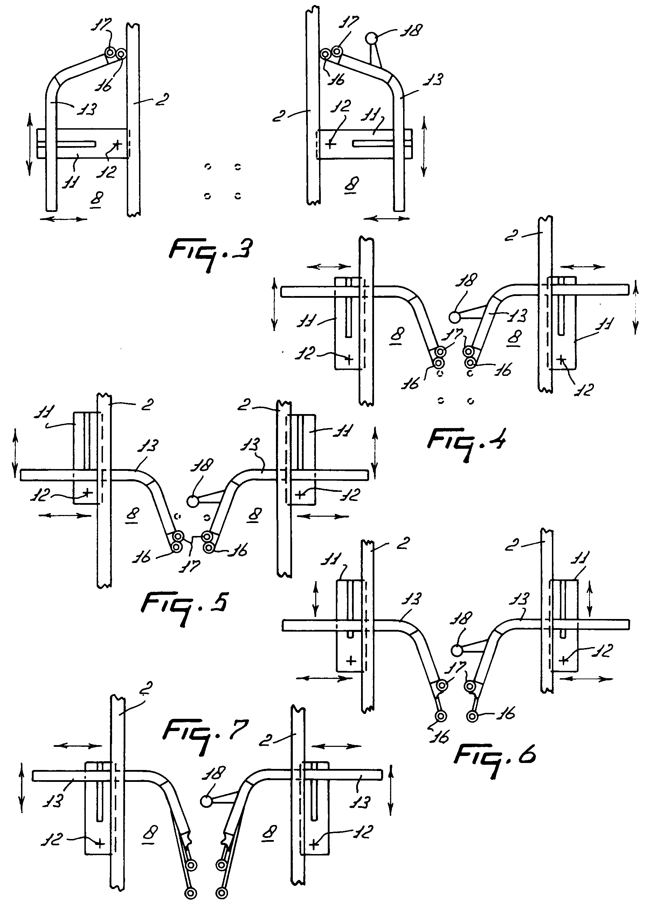

Figures 1 and 2 show a plan view and a side view, respectively, of a milking box 1 which is formed by a frame 2, which constitutes the two sides of the milking box 1, a door 3, via which an animal to be milked can enter the milking box, and a door 4, through which a milked animal can again leave the milking box. Attached to the door 4 there is a feed trough 5 which forms part of an automatic feeding system - not shown - for supplying concentrate. The door 3 is equipped with positioning means 6 for retaining an animal present in the milking box in a more or less defined position in the milking box 1. The milking box 1 is provided with a milking robot 7 which, in this embodiment, comprises two robot arm constructions 8, which are arranged on either side of the milking box 1. These robot arm constructions 8 are shown only schematically and include a vertically arranged pillar 9, to the upper end of which a parallelogram construction 10 is attached, a supporting element 11 being movable in height with the aid of this parallelogram construction 10. In addition, this supporting element 11 is pivotal about a vertical shaft 12. By means of the supporting element 11, a carrier 13 is arranged in such a manner extending in two directions, which are perpendicular to each other, that it is movable in a horizontal plane. Although the motional means for moving the supporting element 11 in the vertical direction with the aid of the parallelogram construction 10 and the motional means for pivoting same about the vertical shaft 12 are not shown in the drawings, the means with the aid of which the carrier 13 is movable with respect to the supporting element 11 in two directions which extend perpendicularly to each other are however indeed shown. Both these latter motional means and the non-shown motional means are preferably constituted by pneumatic cylinders 14 and 15. These cylinders 14 and 15 act as a kind of spring to allow a limited freedom of motion of the carrier 13, more specifically when it comes in some way or another in contact with the animal in a rough manner. The carrier 13 extends in two directions. Figure 1 shows that that portion of the carrier 13 that is connected to the supporting element 11 extends in a horizontal plane transversely to the longitudinal direction of the milking box 1, whereas the other end of the carrier 13 extends in a horizontal plane obliquely rearwardly and inwardly. Such a construction of the carriers 13 allows an easy access to the teats of the animal without being obstructed by the legs and without the carriers 13 of the teat cups interfering with each other. In this embodiment, each of the carriers 13 is suitable for carrying two teat cups 16 and 17. Because of the use of two carriers 13 of a very specifically chosen design and by arranging these carriers on both sides of the milking box 1, simultaneous coupling of two teat cups 16 or 17 to two teats is possible, as a result of which the period of time for coupling the teat cups to the teats can be significantly reduced. One of the carriers 13 is equipped with a detection device 18, such as a laser. This detection device 18 is disposed in such a manner that, when the carrier 13 to which this detection device is attached has been moved to under the animal in the position shown in Figure 1, the detection device 18 is located approximately in the midway point under the animal at the leading side of the udder. With the aid of this detection device 18, which is disposed in such a manner that it reciprocates or rotates about a vertical shaft, it is possible to determine the position of the four teats with respect to the carrier 13 to which the detection device 18 is connected. With the aid of the cylinders 14 and 15 the carrier 13, to which the detection device 18 is connected, can be moved, until the position of a teat, determined by the detection device 18, with respect to the detection device 18 corresponds to the position of a relevant teat cup on the last-mentioned carrier with respect to the detection device 18. For the displacement of the other carrier, the position of the carrier to which the detection device 18 is connected and the position, measured with the aid of the detection device 18, of the relevant teats with respect to the carrier to which the detection device 18 is connected must be taken into account.

The carriers 13 are at least partly of a tubular design and comprise a non-shown cylinder, whose end is connected to a teat cup 16, 17 via a flexible connecting element 19. This flexible connecting element 19, which may be constituted by a cord or a cable, renders it possible for the teat cup connected thereto to remain, during milking, in connection in a freely movable manner with the relevant carrier 13, more specifically by refraining from energizing, during milking, the cylinder to which the flexible connecting element 19 is connected and which is disposed in the tubular carrier 13, whilst, after milking, by energizing the last-mentioned cylinder, the teat cup can be pulled up against the end of the carrier 13. When a carrier 13 has been moved such with the aid of the cylinders 14 and 15 that one of the teat cups has been moved to under a relevant teat and is connected thereto, then, after releasing the cylinder in the tubular carrier, this carrier can be moved more in particular in such a mannner that the other teat cup connected to this carrier is moved to under another teat for connection to said teat.

With reference to Figures 3 - 7, it will be described how the teat cups 16, 17, two of which are connected to each carrier 13, can be connected to the teats of an animal in the milking box 1.

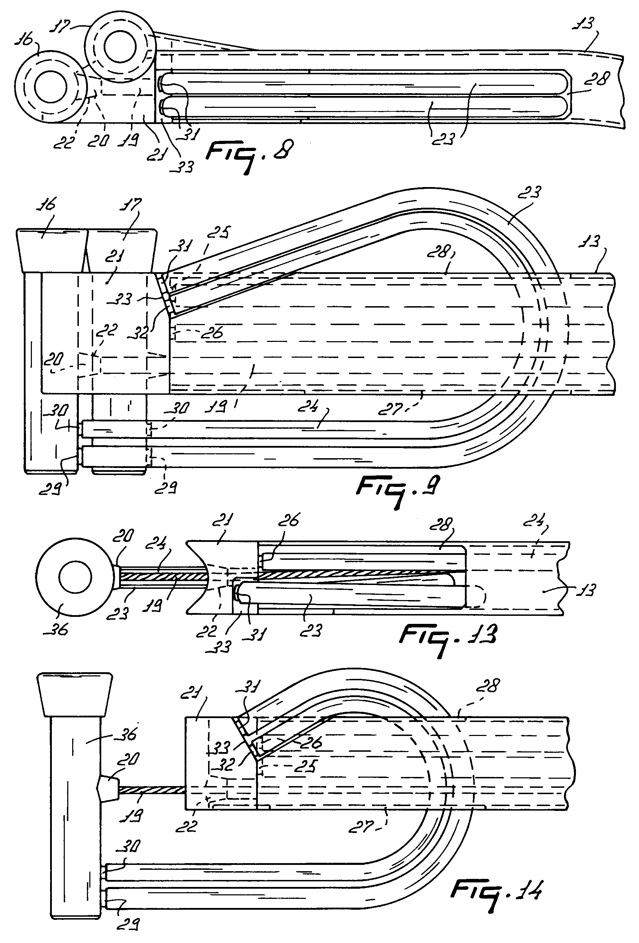

In Figure 3, the two robot arm constructions 8 are disposed on both sides of the milking box 1 in the rest condition. In this condition, an animal to be milked can enter the milking box 1; the supporting element 11 has then been pivoted in such a manner about the vertical shaft 12 that this supporting element extends outwardly transversely to the longitudinal direction of the milking box 1. The carriers 13 with the teat cups 16 and 17 are then completely outside the milking box 1. By pivoting the supporting element 11 through 90° about the shaft 12, the carriers 13 with the teat cups 16 and 17 are moved to under the animal standing in the milking box 1. In this situation, which is shown in Figure 4, the detection device 18 is in a position approximately in the midway point under the animal, more specifically at the leading side of the udder of this animal. The carriers 13 can now be moved individually or simultaneously in such a manner in two directions which are perpendicular to each other, that the teat cups 16 arrive under the rear teats of the animal, so that only an upward motion of the teat cups 16 is sufficient to connect them to these teats. This situation is shown in Figure 5. Thereafter the relevant cylinders contained in the tubular carriers, of which each cylinder is connected to a teat cup 16 via a flexible connecting element 19, are released, so that the carriers 13 can be advanced without pulling the teat cups 16 from the teats. The carriers 13 are now moved such that the teat cups 17 arrive under the leading teats of the animal, whereafter the teat cups 17 can be connected individually or simultaneously by an upward motion to the leading teats of the animal. This situation is shown in Figure 6. Thereafter the cylinders contained in the tubular carriers, each cylinder of which is connected via a flexible connecting element 19 to a teat cup 17, are de-energized, so that the carriers 13 can be advanced, resulting in that all four teat cups 16, 17 continue to be in a flexible connection with the two carriers 13, so that during milking the animal has some motional freedom without the risk that the teat cups could be pulled from the teats, which might be the case when a rigid connection of the teat cups to the carriers were used. The latter situation is shown in Figure 7.

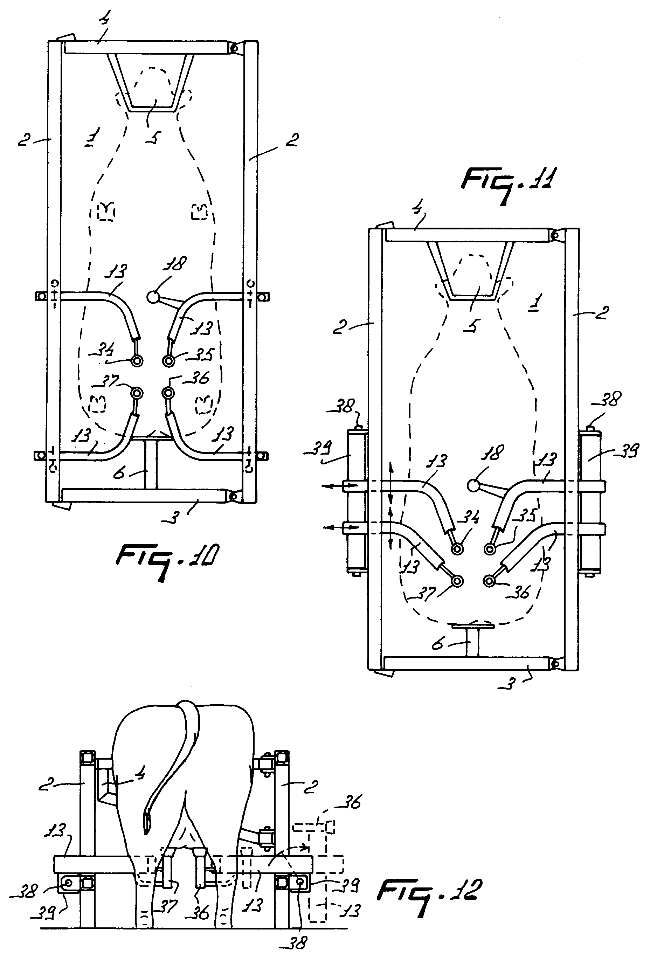

Figures 8 and 9 show in a plan view and a side view, respectively, how the two teat cups 16 and 17 are connected to the end of a carrier 13. At its side, each teat cup is provided with a bulging portion, preferably a conical bulge 20, to which the flexible connecting element 19 is connected. That end of a carrier 13 that is located near the teat cups is provided with a through-connection element 21. This through-connection element 21 has at its exterior side two recesses 22, the shape of which corresponds to the conical bulge 20 at the side of the teat cups 16, 17. Such a conical recess 22 has a through-bore through the through-connection element 21, through which the relevant flexible connecting element 19 is passed, so that when this flexible connecting element 19 is tightened, the conical bulge 20 at the side of the relevant teat cup is pulled into the relevant conical recess 22 in the through-connection element 21. The through-connection element 21 also serves for the through-connection of the milk and/or pulsation tube leading to a teat cup. The milk tube 23 and/or the pulsation tube 24 are passed through the tubular carrier 13 to the respective points of connection 25 and 26 provided for that purpose in the through-connection element 21. In addition, the milk tube 23 and the pulsation tube 24, if present, must be of a flexible construction between the through-connection element 21 and the teat cups 16 and 17. For that purpose, the end of the tubular carrier 13 is provided at both the bottom side and the upper side with a slotted aperture 27 and 28, respectively. From the connecting points 29 and 30 of the teat cups, the milk and pulsation tubes extend one above the other, passing underneath the end of the carrier 13 and thereafter are passed upwardly through the carrier 13 through the slotted aperture 27 at the bottom side of the carrier 13 and via the slotted aperture 28 and the upper side of the carrier 13 in a loop shape over and along the carrier 13 forwardly and downwardly to the connecting points 31 and 32 at the rear side of the through-connection element 21; to that end, this rear side is provided with a bevelled plane 33. The size and the flexibility of the loop-shaped section of the milk and/or pulsation tube 23 and 24, respectively, between the teat cups 16, 17 and the through-connection element 21 in the tubular carrier 13, together with the length of the flexible connecting element 19 and the stroke of the cylinder connected to this flexible connecting element 19 determine, once the teat cups have been connected to the teats, the extent to which the carrier 13 can be withdrawn.

In the embodiments as illustrated in Figures 10 and 11, four carriers 13, each for a teat cup 34, and 35, 36 and 37, respectively, are shown. In both cases, the carriers are arranged in the shape of a star and also here extend each in two directions. In a similar manner as shown in Figure 1, one of the carriers 13 is equipped with a detection device 18. In the embodiment shown in Figure 10, the carriers 13 are arranged such that the carriers with the teat cups 34, 35 which are to be connected to the leading teats of the animal must approach the udder from the side of the milking box 1 passing between the front and hind legs, whereas the carriers with the teat cups 36, 37 which are intended for connection to the rear teats must be moved to under the animal passing between the two hind legs. In this embodiment, the carriers 13 are still further remote from each other and can easily be moved to under the animal independently of each other, both individually and simultaneously, without interfering with each other. As is also the case in Figure 1, the carriers may again have been disposed such that they are movable in two directions and moreover are arranged pivotally near the exterior wall of the milking box 1. A similar construction as shown in Figure 1 is then possible. In Figure 11 two carriers 13, each carrying one teat cup for a leading and one for a trailing teat, are each time moved to under the udder of the animal from one side of the milking box 1 passing between a front and a hind leg. This construction is shown in a rear view in Figure 12. In this situation, the carriers 13 are pivotal about a horizontal pivot shaft 38 which extends in the lengthwise direction of the milking box 1 and, in the embodiment shown, is disposed just next to the longitudinal side wall of the milking box 1. Also in this case, the carriers 13 are movable in both the lengthwise direction of the milking box 1 and in the direction transversely thereto. A supporting element 39, onto which the carriers 13 have been disposed, is pivotal about the shaft 38. In the rest position, the carriers 13 are in a vertical position outside the milking box 1, whilst the carriers 13 are moved in a horizontal plane by having them perform a pivotal motion about the horizontal shaft 38, in which plane the teat cups can be displaced in both the transverse direction and in the lengthwise direction of the milking box 1 for being moved to under the teats of the animal. The connection of each of the teat cups 34 - 37 to a carrier 13 is here similar to the manner in which in Figures 8 and 9 two teat cups are coupled to a carrier 13. The connection of one teat cup and one carrier is shown in Figures 13 and 14. Also in this case, the teat cup is provided at its side with a conical bulging portion 20, to which a flexible connecting element 19 is secured, whilst with the aid of this flexible connecting element the conical bulging portion can be pulled into a recess 22 of a through-connection element 21. To that end, also the recess 22 has a through-bore for the flexible connecting element. Also in this case, the carrier 13 is provided at both the bottom side and the upper side with respective slotted apertures 27 and 28, so that a milk and/or pulsation tube 23 and 24, respectively, can be passed at the bottom side of the carrier 13 through the carrier 13 in the upper direction and through the slotted aperture 28 in the upper side of the carrier 13 and be connected in the shape of a loop to the through-connection element 21 in a similar manner as shown in Figure 9. Obviously, it also holds here that, when a teat cup has been connected and the carrier 13 is withdrawn, the extent to which the carrier can be withdrawn is determined by the nature of the loop in the milk and/or pulsation tube, more in particular by the flexibility of the material of both tubes, and of course the length of the flexible connecting element and the stroke of the cylinder connected thereto in the carrier. The manner of coupling a cup to a teat and the withdrawing mechanism of a cup on a carrier arm 13 are similar to those in the embodiment illustrated in Figures 8 and 9.

The invention is not limited to the embodiments described and shown here, but also relates to all kinds of modifications, of course in sofar they are within the scope of the accompanying claims.

## Claims

1. A construction for automatically milking animals, such as cows, comprising a milking box (1) and a milking robot (7) with teat cups (16, 17, 34 - 37), characterized in that out of a set of four teat cups (16, 17, 34 - 37) a simultaneous coupling of either two or four teat cups (16, 17, 34 - 37) with the corresponding either two or four teats of an animal to be milked is obtainable by means of a plurality of carriers (13), with each carrier being suitable for carrying at least one of said teat cups.

2. A construction as claimed in claim 1, characterized in that each of the carriers (13) is suitable for carrying one teat cup (34 - 37), whilst two carriers (13) can be moved to under the animal from one side of the animal.

3. A construction as claimed in claim 1 or 2, characterized in that a carrier (13) is pivotal from a rest position about a shaft (12) which extends along the exterior side of and near a side wall of the milking box (1) to an operating position under the udder of an animal.

4. A construction as claimed in claim 3, characterized in that a carrier (13) is pivotal about a mainly vertical shaft (12).

5. A construction as claimed in claim 3 or 4, characterized in that a carrier (13) being capable of being moved in two different directions, is disposed on a supporting element (11) which is pivotal about a mainly vertical shaft (12).

6. A construction as claimed in claim 5, characterized in that the supporting element (11) is movable in height, for example by means of a parallelogram construction (10), disposed at the exterior side of a side wall of the milking box (1).

7. A construction as claimed in claim 3, characterized in that a carrier (13) is pivotal about a mainly horizontal shaft (38) which extends in the lengthwise direction of the milking box (1).

8. A construction as claimed in claim 3 or 7, characterized in that a carrier (13) being capable of movement in two different directions, is disposed on a supporting element (11) which is pivotal about a mainly horizontal shaft (38) extending in the lengthwise direction of the milking box (1).

9. A construction as claimed in claim 7 or 8, characterized in that at that end of a carrier (13) that is remote from the teat cup or teat cups a spring is provided which compensates for the weight of the teat cup or teat cups.

10. A construction as claimed in any one of the preceding claims, characterized in that a detection device (18), such as a laser, is present, which is connected to one of the carriers (13), it being possible to detect the position of the teats of an animal with the aid of this detection device (18).

11. A construction as claimed in claim 10, characterized in that, when the carrier (13) to which the detection device (18) is connected has been adjusted to the working position and, if necessary, has been moved in such a manner that the teat cup or teat cups carried by it is/are in a position under the udder of the animal, the detection device (18) is located in an approximately central position under the animal at the front side of the udder.

12. A construction as claimed in any one of the preceding claims, characterized in that at least that end of a carrier (13) where it supports one or more teat cups (16, 17, 34 - 37) is of a tubular construction.

13. A construction as claimed in claim 12, characterized in that a teat cup (16, 17, 34 - 37) is connected via a flexible connecting element (19), such as a cord or cable, to a relevant carrier (13) in such a manner that, during milking, it is freely movable and said teat cup being pulled up against the end of this carrier (13), after milking.

14. A construction as claimed in claim 13, characterized in that the flexible connecting element (19) can be drawn through the tubular portion of the carrier (13).

15. A construction as claimed in any one of claims 12 - 15, characterized in that, at its side, a teat cup (16, 17, 34 - 37) is provided with a bulging portion (20) which can be pulled with the aid of a flexible connecting element (19) in a correspondingly shaped recess (22) in the end of a carrier (13).

16. A construction as claimed in any one of claims 12 - 18, characterized in that, at or near the end of a tubular carrier (13), a through-connection element (21) for one or more milk (23) and/or pulsation (24) tubes is accommodated inside the carrier (13).

17. A construction as claimed in claim 16, characterized in that the through-connection element (21) is provided with a pierced recess, whilst a teat cup (16, 17, 34 - 37) can be pulled into this recess against the carrier (13) with the aid of a flexible connecting element (19) passed through the through-bore in a recess (22).

18. A construction as claimed in claim 16 or 17, characterized in that the section of the milk (23) and/or pulsation (24) tube between a teat cup (16, 17, 34 - 37) and the through-connection element (21) extends in the shape of a loop.

19. A construction as claimed in claim 18, characterized in that one or more tubes (23, 24) are accommodated in a tubular carrier (13) in such a manner that they partly extend at the upper side of the tubular carrier (13) to over the tubular carrier (13) in the shape of an arc.

20. A construction as claimed in claim 18 or 19, characterized in that the section of the milk (23) and/or pulsation (24) tube between a teat cup (16, 17, 34 - 37) and the through-connection element (21) is connected to the through-connection element (21) from the teat cup (16, 17, 34 - 37) through a slotted aperture (27) in the bottom side of the tubular portion of the carrier by passing it through this tubular portion of the carrier (13) and through a slotted aperture (28) in the upper side of the tubular portion of the carrier (13).

21. A construction as claimed in any one of claims 16 - 20, characterized in that the through-connection element (21) is suitable for the milk (23) and/or pulsation (24) tube of two teat cups, whilst the through-connection element (21) is provided with two recesses (22) into which the two teat cups, which are provided with a bulging portion (20), can be pulled.

22. A construction as claimed in claim 21, characterized in that, in the tightened state, the two teat cups are disposed at the end of a carrier (13) substantially in contact with each other.

## Patentansprüche

1. Vorrichtung zum automatischen Melken von Tieren, z. B. von Kühen, mit einer Melkbox (1) und einem Melkroboter (7) mit Zitzenbechern (16, 17, 34-37),
dadurch gekennzeichnet, daß von einem Satz von vier Zitzenbechern (16, 17, 34-37) jeweils zwei oder alle vier Zitzenbecher (16, 17, 34-37) gleichzeitig an die beiden zugehörigen oder an alle vier Zitzen eines zu melkenden Tieres mittels mehrerer Träger (13) anzuschließen sind, wobei jeder Träger zum Halten mindestens eines Zitzenbechers vorgesehen ist.

2. Vorrichtung nach Anspruch 1,
dadurch gekennzeichnet, daß jeder Träger (13) zum Halten eines Zitzenbechers (34-37) vorgesehen ist, wobei von einer Seite des Tieres zwei Träger (13) unter das Tier bewegbar sind.

3. Vorrichtung nach Anspruch 1 oder 2,
dadurch gekennzeichnet, daß ein Träger (13) um eine sich entlang der Außenseite und nahe einer Seitenwand der Melkbox (1) erstreckende Achse (12) aus einer Ruhelage in eine Arbeitslage unter das Euter eines Tieres schwenkbar ist.

4. Vorrichtung nach Anspruch 3,
dadurch gekennzeichnet, daß ein Träger (13) um eine im wesentlichen vertikale Achse (12) schwenkbar ist.

5. Vorrichtung nach Anspruch 3 oder 4,
dadurch gekennzeichnet, daß ein in zwei verschiedene Richtungen bewegbarer Träger (13) auf einem Stützelement (11) angeordnet ist, das um eine im wesentlichen vertikale Achse (12) schwenkbar ist.

6. Vorrichtung nach Anspruch 5,
dadurch gekennzeichnet, daß das Stützelement (11) höhenbewegbar ist, z. B. mittels einer Parallelogrammführung (10), die an der Außenseite einer Seitenwand der Melkbox (1) angeordnet ist.

7. Vorrichtung nach Anspruch 3,
dadurch gekennzeichnet, daß ein Träger (13) um eine im wesentlichen horizontale Achse (38) schwenkbar ist, die sich in Längsrichtung der Melkbox (1) erstreckt.

8. Vorrichtung nach Anspruch 3 oder 7,
dadurch gekennzeichnet, daß ein in Zwei verschiedene Richtungen bewegbarer Träger (13) auf einem Stützelement (11) angeordnet ist, das um eine im wesentlichen horizontale Achse (38) schwenkbar ist, die sich in Längsrichtung der Melkbox (1) erstreckt.

9. Vorrichtung nach Anspruch 7 oder 8,
dadurch gekennzeichnet, daß an dem Ende eines Trägers (13), das von dem oder den Zitzenbechern abgewandt ist, eine Feder angeordnet ist, die das Gewicht des oder der Zitzenbecher kompensiert.

10. Vorrichtung nach einem der vorhergehenden Ansprüche,
dadurch gekennzeichnet, daß eine Ermittlungseinrichtung (18), wie z. B. ein Laser, vorhanden ist, die mit einem der Träger (13) verbunden ist, und mittels der die Position der Zitzen eines Tieres zu bestimmen ist.

11. Vorrichtung nach Anspruch 10,
dadurch gekennzeichnet, daß die Ermittlungseinrichtung (18) in einer etwa mittigen Lage unter dem Tier an der Vorderseite des Euters positioniert ist, wenn der Träger (13), mit dem die Ermittlungseinrichtung (18) verbunden ist, in die Arbeitslage eingestellt und, falls erforderlich, derart bewegt worden ist, daß sich der oder die von ihm getragenen Zitzenbecher in einer Position unterhalb des Euters des Tieres befinden.

12. Vorrichtung nach einem der vorhergehenden Ansprüche,
dadurch gekennzeichnet, daß zumindest das einen oder mehrere Zitzenbecher (16, 17, 34-37) tragende Ende eines Trägers (13) rohrförmig ausgebildet ist.

13. Vorrichtung nach Anspruch 12,
dadurch gekennzeichnet, daß ein Zitzenbecher (16, 17, 34-37) über ein flexibles Verbindungselement (19), wie z. B. ein Seil oder Kabel, mit einem zugehörigen Träger (13) derart verbunden ist, daß der Zitzenbecher während des Melkens frei beweglich ist und nach dem Melken gegen das Ende des Trägers (13) gezogen wird.

14. Vorrichtung nach Anspruch 13,
dadurch gekennzeichnet, daß das flexible Verbindungselement (19) durch den rohrförmigen Teil des Trägers (13) hindurchzuziehen ist.

15. Vorrichtung nach einem der Ansprüche 12 bis 15,
dadurch gekennzeichnet, daß an der Seite eines Zitzenbechers (16, 17, 34-37) ein ausgebuchteter Teil (20) vorhanden ist, der mittels eines flexiblen Verbindungselementes (19) in eine entsprechend geformte Ausnehmung (22) im Ende eines Trägers (13) zu ziehen ist.

16. Vorrichtung nach einem der Ansprüche 12 bis 18,
dadurch gekennzeichnet, daß an oder nahe dem Ende eines rohrförmigen Trägers (13) ein Durchverbindungselement (21) für eine oder mehrere Milchleitungen (23) und/oder Pulsierleitungen (24) innerhalb des Trägers (13) angeordnet ist.

17. Vorrichtung nach Anspruch 16,
dadurch gekennzeichnet, daß das Durchverbindungselement (21) eine gelochte Ausnehmung aufweist, wobei ein Zitzenbecher (16, 17, 34-37) mittels eines flexiblen Verbindungselementes (19), das durch die Durchgangsbohrung in einer Ausnehmung (22) hindurchgeführt ist, gegen den Träger (13) in diese Ausnehmung hineinzuziehen ist.

18. Vorrichtung nach Anspruch 16 oder 17,
dadurch gekennzeichnet, daß der zwischen einem Zitzenbecher (16, 17, 34-37) und dem Durchverbindungselement (21) liegende Abschnitt der Milchleitung (23) und/oder der Pulsierleitung (24) schlaufenförmig angeordnet ist.

19. Vorrichtung nach Anspruch 18,
dadurch gekennzeichnet, daß eine oder mehrere Leitungen (23, 24) in einem rohrförmigen Träger (13) derart angeordnet sind, daß sie an der Oberseite des rohrförmigen Trägers (13) bogenförmig über diesen hinausstehen.

20. Vorrichtung nach Anspruch 18 oder 19,
dadurch gekennzeichnet, daß die Verbindung des zwischen einem Zitzenbecher (16, 17, 34-37) und dem Durchverbindungselement (21) liegenden Abschnittes der Milchleitung (23) und/oder der Pulsierleitung (24) mit dem Durchverbindungselement (21) und dem Zitzenbecher (16, 17, 34-37) durch eine schlitzförmige Öffnung (27) in der Unterseite des rohrförmigen Teiles des Trägers hergestellt wird, derart, daß der Leitungsabschnitt durch diesen rohrförmigen Teil des Trägers (13) sowie durch eine schlitzförmige Öffnung (28) in der Oberseite des rohrförmigen Teiles des Trägers (13) hindurchgeführt ist.

21. Vorrichtung nach einem der Ansprüche 16 bis 20,
dadurch gekennzeichnet, daß das Durchverbindungselement (21) für die Milchleitung (23) und/oder die Pulsierleitung (24) zweier Zitzenbecher ausgelegt ist, wobei das Durchverbindungselement (21) zwei Ausnehmungen (22) aufweist, in die die beiden mit einem ausgebuchteten Teil (20) versehenen Zitzenbecher hineinzuziehen sind.

22. Vorrichtung nach Anspruch 21,
dadurch gekennzeichnet, daß die beiden Zitzenbecher in angezogenem Zustand im wesentlichen einander berührend am Ende eines Trägers (13) liegen.

## Revendications

1. Dispositif de traite automatique d'animaux tels que des vaches, comprenant une stalle de traite (1) et un robot trayeur (7) avec des godets de trayons (16, 17, 34 à 37),
**caractérisé** en ce que, pour un ensemble de quatre godets de trayons (16, 17, 34 à 37), un couplage simultané de deux ou de quatre godets de trayons (16, 17, 34 à 37) avec les deux ou quatre trayons correspondants d'un animal à traire peut être obtenu au moyen d'une pluralité d'organes porteurs (13), chaque organe porteur étant apte à porter au moins un desdits godets de trayons.

2. Dispositif selon la revendication 1, caractérisé en ce que chacun des organes porteurs (13) est apte à porter un godet de trayon (34 à 37), tandis que deux organes porteurs (13) peuvent être amenés jusque sous l'animal à partir d'un côté de l'animal.

3. Dispositif selon la revendication 1 ou 2, caractérisé en ce qu'un organe porteur (13) est pivotant à partir d'une position de repos autour d'un arbre (12) qui s'étend le long du côté extérieur de la stalle de traite (1) et près d'une paroi latérale de celle-ci, jusqu'à une position active sous le pis d'un animal.

4. Dispositif selon la revendication 3, caractérisé en ce qu'un organe porteur (13) est pivotant autour d'un arbre (12) généralement vertical.

5. Dispositif selon la revendication 3 ou 4, caractérisé en ce qu'un organe porteur (13) pouvant être entraîné en deux directions différentes, est disposé sur un élément de support (11) qui est pivotant autour d'un arbre (12) généralement vertical.

6. Dispositif selon la revendication 5, caractérisé en ce que l'élément de support (11) est mobile en hauteur, par exemple au moyen d'une structure en parallélogramme (10) disposée sur le côté extérieur d'une paroi latérale de la stalle de traite (1).

7. Dispositif selon la revendication 3, caractérisé en ce qu'un organe porteur (13) est pivotant autour d'un arbre (38) généralement horizontal qui s'étend dans le sens longitudinal de la stalle de traite (1).

8. Dispositif selon la revendication 3 ou 7, caractérisé en ce qu'un organe porteur (13) pouvant faire mouvement dans deux directions différentes est disposé sur un élément de support (11) qui est pivotant autour d'un arbre (38) généralement horizontal, s'étendant dans le sens longitudinal de la stalle de traite (1).

9. Dispositif selon la revendication 7 ou 8, caractérisé en ce qu'il est prévu, sur l'extrémité d'un organe porteur (13) qui est éloignée du ou des godets de trayons, un ressort qui compense le poids du ou des godets de trayons.

10. Dispositif selon l'une quelconque des revendications précédentes, caractérisé en ce qu'un dispositif de détection (18) tel qu'un laser est présent, en étant relié à un des organes porteurs (13), avec la possibilité de détecter la position des trayons d'un animal à l'aide de ce dispositif de détection (18).

11. Dispositif selon la revendication 10, caractérisé en ce que, quand l'organe porteur (13) auquel est relié le dispositif de détection (18) a été réglé sur la position de travail et a été déplacé, si nécessaire, de manière telle que le ou les godets de trayons portés par cet organe est/sont en une position sous le pis de l'animal, le dispositif de détection (18) est situé en une position approximativement centrale sous l'animal, sur le côté antérieur du pis.

12. Dispositif selon l'une quelconque des revendications précédentes, caractérisé en ce qu'au moins l'extrémité d'un organe porteur (13) où il supporte un ou plusieurs godets de trayons (16, 17, 34 à 37) a une structure tubulaire.

13. Dispositif selon la revendication 12, caractérisé en ce qu'un godet de trayon (16, 17, 34 à 37) est relié par un élément flexible de liaison (19), tel qu'une corde ou un câble, à un organe porteur (13) correspondant, de telle manière que, pendant la traite, il peut se déplacer librement, et ledit godet de trayon étant tiré contre l'extrémité de cet organe porteur (13) après la traite.

14. Dispositif selon la revendication 13, caractérisé en ce que l'élément flexible de liaison (19) peut être tiré à travers la partie tubulaire de l'organe porteur (13).

15. Dispositif selon l'une quelconque des revendications 12 à 14, caractérisé en ce qu'un godet de trayon (16, 17, 34 à 37) présente, sur son côté, un bossage (20) qui peut être tiré, à l'aide d'un élément flexible de liaison (19), dans une alvéole (22) de forme correspondante, dans l'extrémité d'un organe porteur (13).

16. Dispositif selon l'une quelconque des revendications 12 à 18, caractérisé en ce que, à l'extrémité d'un organe porteur tubulaire (13) ou près de celle-ci, un élément de liaison et de passage (21) pour un ou plusieurs tuyaux à lait (23) et/ou tuyaux de pulsation (24) est logé à l'intérieur de l'organe porteur (13).

17. Dispositif selon la revendication 16, caractérisé en ce que l'élément de liaison et de passage (21) présente une alvéole percée, tandis qu'un godet de trayon (16, 17, 34 à 37) peut être tiré dans cette alvéole contre l'organe porteur (13) à l'aide d'un élément flexible de liaison (19) passant à travers le trou traversant dans une alvéole (22).

18. Dispositif selon la revendication 16 ou 17, caractérisé en ce que la section du tuyau à lait (23) et/ou du tuyau de pulsation (24) entre un godet de trayon (16, 17, 34 à 37) et l'élément de liaison et de passage (21) s'étend sous la forme d'une boucle.

19. Dispositif selon la revendication 18, caractérisé en ce qu'un ou plusieurs tuyaux (23, 24) sont logés dans un organe porteur tubulaire (13) de telle manière qu'ils s'étendent partiellement au côté supérieur de l'organe porteur tubulaire (13) jusqu'au-dessus de l'organe porteur tubulaire (13) sous la forme d'un arc.

20. Dispositif selon la revendication 18 ou 19, caractérisé en ce que la section du tuyau à lait (23) et/ou du tuyau de pulsation (24) entre un godet de trayon (16, 17, 34 à 37) et l'élément de liaison et de passage (21) est reliée à l'élément de liaison et de passage (21) à partir du godet de trayon (16, 17, 34 à 37) à travers une ouverture en fente (27) dans la face inférieure de la partie tubulaire de l'organe porteur en passant dans cette fente à travers cette partie tubulaire de l'organe porteur (13) et à travers une ouverture en fente (28) dans la face supérieur de la partie tubulaire de l'organe porteur (13).

21. Dispositif selon l'une quelconque des revendications 16 à 20, caractérisé en ce que l'élément de liaison et de passage (21) convient pour le tuyau à lait (23) et/ou pour le tuyau de pulsation (24) de deux godets de trayons, tandis que l'élément de liaison et de passage (21) est muni de deux alvéoles (22) dans lesquelles les deux godets de trayons qui sont munis d'un bossage (20) peuvent être tirés.

22. Dispositif selon la revendication 21, caractérisé en ce que, dans l'état où ils sont serrés, les deux godets de trayons sont disposés à l'extrémité d'un organe porteur (13), pratiquement au contact l'un de l'autre.
